# EUROPEAN PATENT APPLICATION

(11) **EP 3 543 764 A1**
(43) Date of publication of application: **25.09.2019**
(21) Application number: 17871381.4
(22) Date of filing: 06.11.2017
(51) Int. Cl.: G02B 27/01, B05C 13/02, B60K 35/00

(54) **DISPLAY MEMBER, HEAD-UP DISPLAY DEVICE, AND JIG**

(30) Priority: 16.11.2016 JP 2016222991
(71) Applicant: Konica Minolta, Inc., Tokyo 100-7015 (JP)
(72) Inventor: KAMIKURA, Takayuki, Tokyo 100-7015 (JP); KIYOSUE, Shigenori, Tokyo 100-7015 (JP)
(74) Representative: Henkel, Breuer & Partner
(86) International application number: PCT/JP2017/039943
(87) International publication number: WO 2018/092624

(57) **Abstract**

This display member (200) comprises an optical surface on which a predetermined treatment is performed and a member engagement section (202) that is connected to the optical surface and gripped by a first engagement member and a second engagement member of jigs (302). The member engagement section (202) has a thick section connected with a thin section of a smaller size than the thick section. A first relation in which the first engagement member and the second engagement member are separated from each other is obtained when the jigs (302) approach and pass over the thick section, and when said jigs (302) subsequently arrive at the thin section, a second relation is obtained in which the first engagement member and the second engagement member are brought closer together than while in the first relation. The member engagement section (202) is in line contact or surface contact with both the first engagement member and the second engagement member at least while in the second relation. The member engagement section (202) is clamped by the first engagement member and the second engagement member while in the second relation and is thereby held via the jigs (302) during the predetermined treatment.

## Description

### Technological Field

The present invention relates to a head-up display device mainly used in an automobile, for example. More specifically, the present invention relates to a display member which is preferably used in a head-up display device, a head-up display device, and a jig with which, through a translucent display member (combiner), scenery in front of the vehicle which is viewed by light passing through a combiner and images and information provided by light reflected from the combiner can be viewed overlapped in a visual field of a driver (observer).

### Background Art

If information such as speed shown on meters in a vehicle can be directly projected on a windshield as a virtual image while a driver is driving an automobile, the driver can drive without changing his visual field, and this may prevent an accident. As a means to directly project information to a visual field of a human, a head-up display device is developed. Usually in such head-up display device, light emitted from a projector such as a small liquid crystal projector passes light and reflects light with a combiner (display member) formed from a transparent base including a half mirror or a windshield. Therefore, a driver (observer) is able to obtain information displayed on the combiner and is also able to obtain at the same time outside information such as outside scenery through the combiner.

A hard coat layer may be provided in a layer forming a surface of a combiner in order to provide a certain degree of hardness to the combiner for the purpose of preventing cracks. The hard coat layer can be typically formed by dipping the material of the combiner in a processing liquid and then drying and hardening the above. In such case, there is a problem of how to dip the material of the combiner formed by injection molding in the processing liquid.

Patent Literature 1 discloses a configuration in which one end of a S-shaped hook is hooked to a moving round stick, the other end is hooked to a hole of the base, and the base in a hung state is dipped in the dipping section.

### Prior Art Document

### Patent Literature

Patent Literature 1: Japanese Patent Application Laid-Open Publication No. H09-248507

### Summary

### Problems to be Solved by the Invention

According to the disclosure of Patent Literature 1, the base may shake or fall in the liquid when the base hooked to the S-shaped hook is dipped in the dipping section, and there may be a problem that the base cannot be dipped accurately to a defined position. Moreover, when employing such hook method using a hole in the base and the S-shaped hook, the base needs to be controlled towards the S-shaped hook with a complicated operation to hook the S-shaped hook through the hole. Further, when the hole is provided only for the purpose of hooking the base, the hole remains in the product, and this may decrease the quality of the product.

The present invention is made in view of the above problems, and the purpose of the present invention is to provide a display member which is suitably held in order to be able to perform a predetermined process, a head-up display device which uses such display member, and a jig which holds such display member.

### Means for Solving the Problem

According to the present invention, a display member includes: an optical surface on which a predetermined process is performed; and a member engaging unit which is linked to the optical surface and which is held by a first engaging member and a second engaging member of a jig, wherein, the member engaging unit includes a thick potion and a thin portion which is a size smaller than the thick portion and which is linked to the thick portion, and when the jig comes close and passes the thick portion, the first engaging member and the second engaging member are in a first relation separated from each other, then, when the jig reaches the thin portion, the first engaging member and the second engaging member are in a second relation closer than the first relation, and at least in the second relation, both the first engaging member and the second engaging member are in a linear contact or a surface contact with the member engaging unit, and the member engaging unit is held between the first engaging member and the second engaging member in the second relation and the member engaging unit is held through the jig during the predetermined process.

### Advantageous Effects of Invention

According to the present invention, a display member which is suitably held in order to be able to perform a predetermined process, a head-up display device which uses such display member, and a jig which holds such display member can be provided.

### Brief Description of the Drawings

FIG. 1 is a diagram showing a state in which a head-up display device is mounted on a vehicle body VH.
FIG. 2 is a diagram showing a configuration of a drawing unit 100.
FIG. 3A is a diagram showing a front view (opposite driver side) of a combiner 200 according to an embodiment.
FIG. 3B is a diagram showing a top view of the combiner 200 according to the embodiment.
FIG. 3C is a diagram showing a side view of the combiner 200 according to the embodiment.
FIG. 4 is a diagram showing a state before holding the combiner 200 with the jig 300.
FIG. 5 is a diagram showing a state holding the combiner 200 with the jig 300.
FIG. 6 is a diagram showing the jig 300 separated from the combiner 200.
FIG. 7 is a perspective view showing a relation between a member engaging unit and a jig engaging unit.
FIG. 8 is a diagram showing the combiner 200 held by the jig 300 being dipped.
FIG. 9 is a diagram showing a relation between a holder 302'as a modification of the embodiment and a member engaging unit 202.
FIG. 10 is a diagram showing a perspective view showing a relation between a holder 302 and a member engaging unit 202' in another modification of the embodiment.
FIG. 11A is a schematic diagram showing a time series of an engaging relation between the holder 302 and the member engaging unit 202, and shows an initial state.
FIG. 11B is a schematic diagram showing a time series of an engaging relation between the holder 302 and the member engaging unit 202, and shows a first relation.
FIG. 11C is a schematic diagram showing a time series of an engaging relation between the holder 302 and the member engaging unit 202, and shows a second relation.
FIG. 12A is a schematic diagram showing the holder 302 and the member engaging unit 202 in a second relation, and the member engaging unit 202, and the member engaging unit 202 has a comparatively long linking unit 202c.
FIG. 12B is a schematic diagram showing the holder 302 and the member engaging unit 202 in the second relation, and the member engaging unit 202 has a linking unit 202c with a shape which fits an outer circumference of a roller 302d.

### Embodiment for Carrying Out the Invention

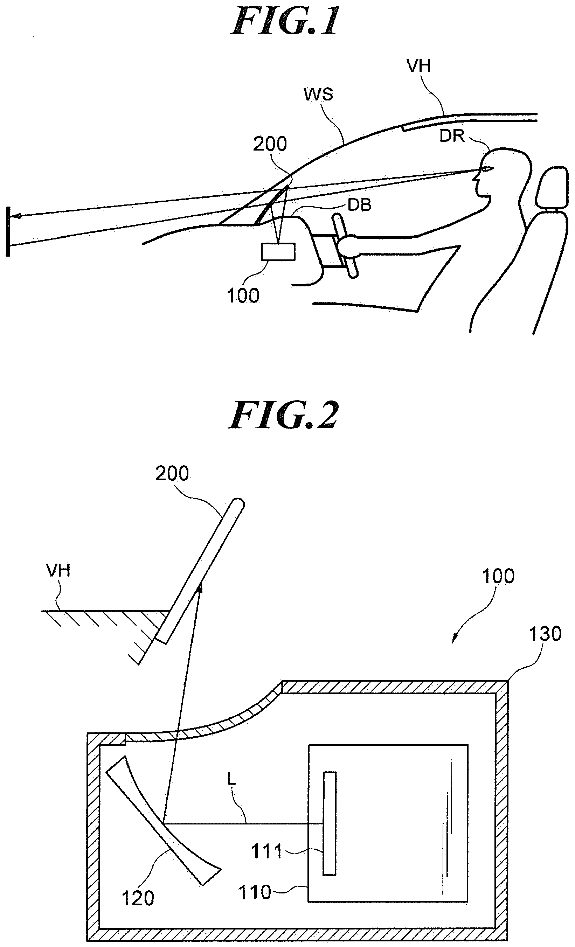

An embodiment of the present invention is described with reference to the drawings. FIG. 1 is a diagram showing a state of a head-up display device according to the present embodiment mounted on a vehicle body VH. A drawing unit 100 is positioned in a dashboard DB of the vehicle body VH and the drawing unit 100 projects display light to a combiner 200 as a display member positioned fixed on the dashboard DB. Such display light is guided to a pupil of a driver DR who is the observer by reflection or diffraction, and a virtual image (display image) is displayed. The driver DR is able to observe a real image such as scenery passing through a windshield WS and the combiner 200 overlapped with the virtual image. The combiner 200 may be foldable or may slide vertically to be storable in the dashboard DB. The head-up display device includes the drawing unit 100 and the combiner 200.

FIG. 2 is a diagram showing a schematic configuration of a drawing unit 100. The drawing unit 100 mainly includes a drawing device 110 including a liquid crystal display panel 111, a concave mirror 120, and a housing 130. The configuration of the drawing device is described in detail in, for example, Japanese Patent Application Laid-Open Publication No. 2012-203176.

The liquid crystal display panel 111 is formed by attaching polarizing plates on both the front surface and the rear surface of a liquid crystal cell enclosing a liquid crystal layer in a pair of translucent substrates in which a transparent electrode film is formed. The light guided from a light source (not shown) in the drawing device 110 to a surface of the liquid crystal display panel 111 passes through the liquid crystal display panel 111 and becomes the display light L. The light is illuminated on the concave mirror (or planar mirror) 120 included in a projection optical system. After the light is reflected, the light heads toward the combiner 200. The combiner 200 is a plate formed in a plate shape with a thickness of 23 to 35 mm (preferably, no larger than 10 mm). A projecting surface of the combiner 200 (driver side) is a toric surface (can also be a free-form surface or spherical surface) in a concave shape with a curvature radius of 100 mm or more to form a virtual image and the rear surface (vehicle front side) is a spherical surface or an aspherical surface similar to the above.

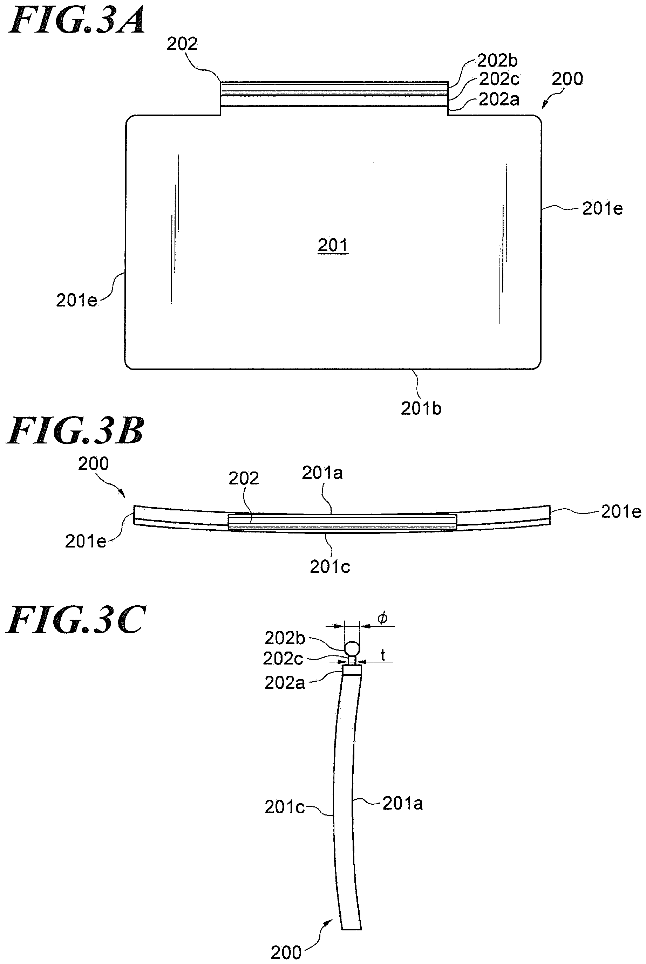

FIG. 3A is a diagram showing a front view (opposite driver side) of a combiner 200 according to a first embodiment, FIG. 3B is a diagram showing a top view of the combiner 200, and FIG. 3C is a diagram showing a side view of the combiner 200. For example, the combiner 200 is formed as one by molding a transparent resin such as polycarbonate, COP, and acrylic by injection molding (mold internal pressure sensor may be used). The combiner 200 includes a projector 201, and a member engaging unit 202 formed in one edge of the projector 201. A projecting surface (one optical surface) 201a of the projector 201 is a toric surface (free-form surface or spherical surface) in a suitable concave shape to form a virtual image, and the rear surface (other optical surface) 201c is a spherical surface or aspherical surface in a similar convex shape. Preferably, a plate thickness of the projector 201 is constant, but the thickness may increase or decrease farther from the center.

By vapor depositing a well-known half mirror film, preferably, the surface of the projector 201 includes a half mirror function with a transmittance of 70% or more and 80% or less. By forming a hard coat on the entire surface of the combiner 200, it becomes resistant to scratches. Preferably, the refractive index of the hard coat attached to the combiner 200 has substantially the same refractive index as the combiner 200. The hard coat is applied using a dipping method, a spray method, a flow method, and a spinning method. The dipping method is used in the later-described example. The film thickness of the hard coat is applied in a range of 0.5µ to 20µm, preferably 1 to 10µm.

As an edge surface (edge) of the projector 201, an upper edge surface 201b which is positioned at the top when attached to the vehicle body VH and a side edge surface 201e are formed. The projecting surface 201a is preferably a spherical surface or an aspherical surface with a curvature radius of 100 mm or more, preferably 200 mm or more and 800 mm or less.

The member engaging unit 202 has a cross section which is the same viewed from the direction shown in FIG. 3C, and the member engaging unit 202 includes a base 202a attached to the projector 201, a cylinder 202b extending along a base 202a, and a plate shaped linking unit 202c linking the base 202a and the cylinder 202b. A diameter φ of the cylinder 202b forming a thick portion is larger than a thickness t of the linking unit 202c. The combiner 200 is fixed to a portion of the vehicle main body VH by an attaching tool or adhesive which are not shown and can be attached to the vehicle main body VH as shown in FIG. 2.

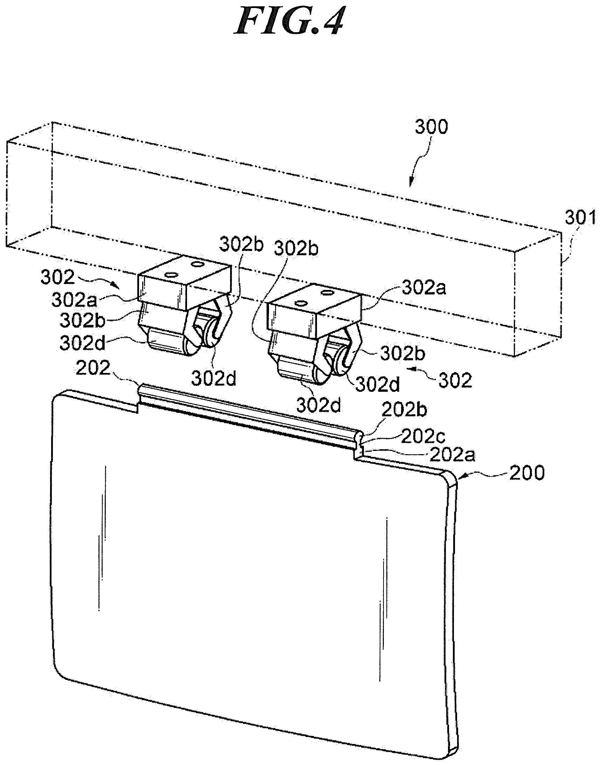

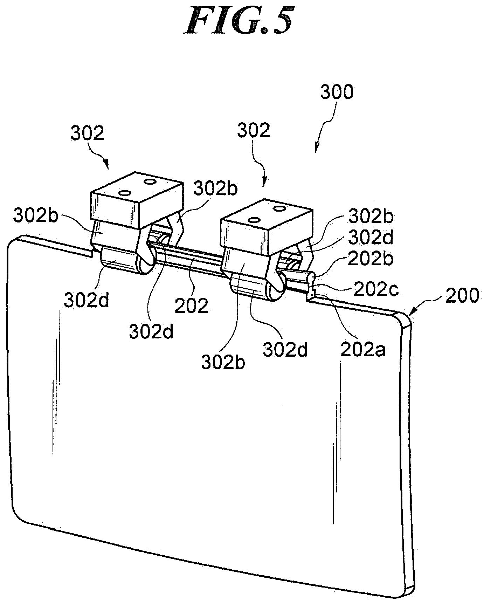

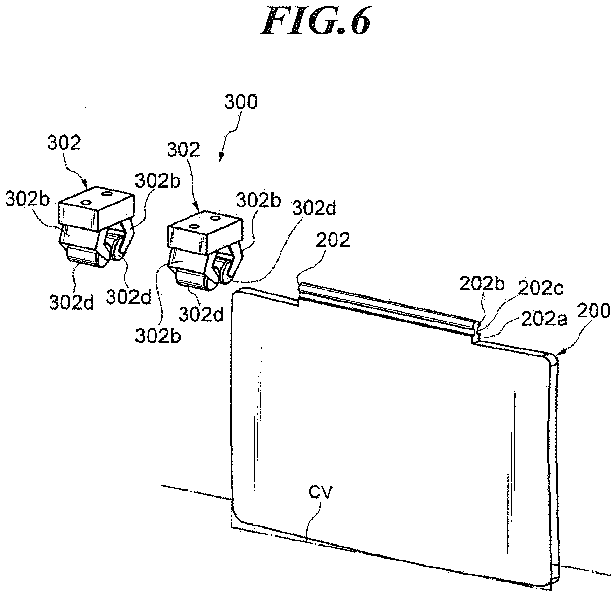

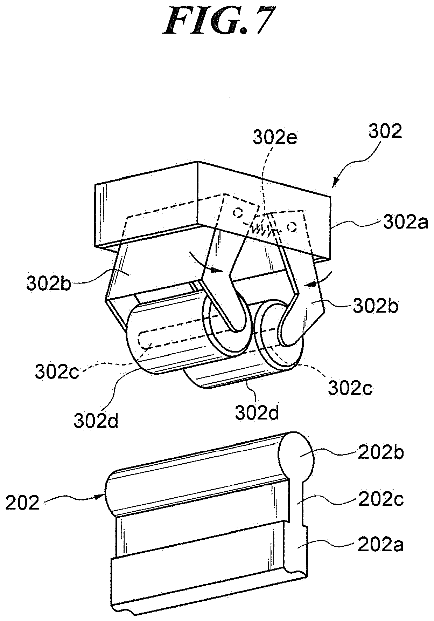

FIG. 4 is a diagram showing a state before the combiner 200 is held by the jig 300. FIG. 5 is a diagram showing the combiner 200 held by the jig 300. FIG. 6 is a diagram showing the jig 300 separated from the combiner 200. FIG. 7 is a diagram showing a perspective view of the relation between the member engaging unit and the jig engaging unit. FIG. 4 shows the frame 301 with a long and short dash line, but this is omitted in the other drawings.

As shown in FIG. 4, the jig 300 includes a plate shaped frame 301 which can be moved three-dimensionally supported by a stage (not shown), and a pair of holders 302, 302 which are attached separated from each other on the bottom surface of the frame 301.

The holders 302 have a similar configuration. Specifically, with reference to FIG. 7, each holder 302 includes, a case 302a fixed to the frame 301, a pair of arm members 302b, 302b linked to one edge (upper edge) in a pivotable state to the case 302a, axes 302c, 302c which are supported from both sides by the other edge (lower edge) of the arm members 302b, 302b, rollers 302d, 302d which are supported rotatably with relation to the axes 302c, 302c, and a spring 302e urged so that the other edge of the arm members 302b, 302b come close to each other in the case 302a. Therefore, normally, the rollers 302d, 302d come into contact with each other due to the urging force of the spring 302e. One arm member 302b and one roller 302d are included as a first engaging member, and the other arm member 302b and the other roller 302d are included as a second engaging member. Here, both the roller 302d and the axis 302c may be different parts, or may be formed as one.

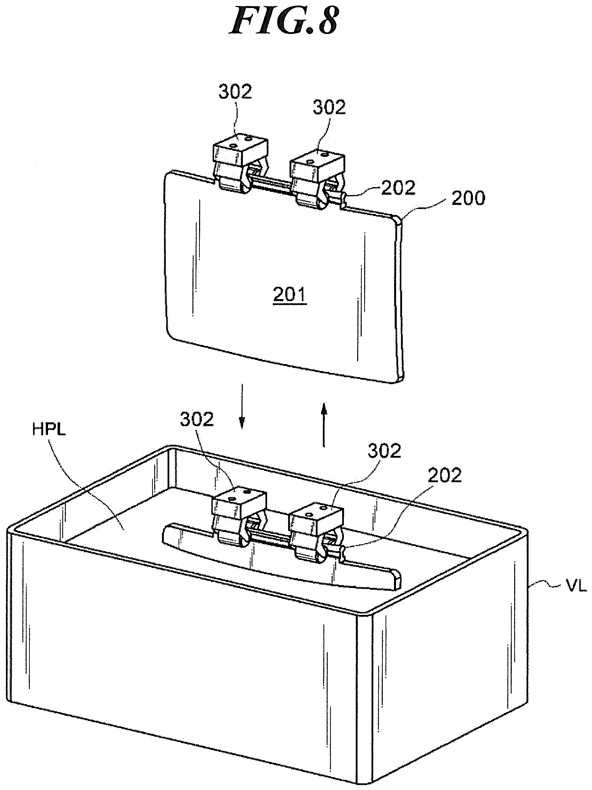

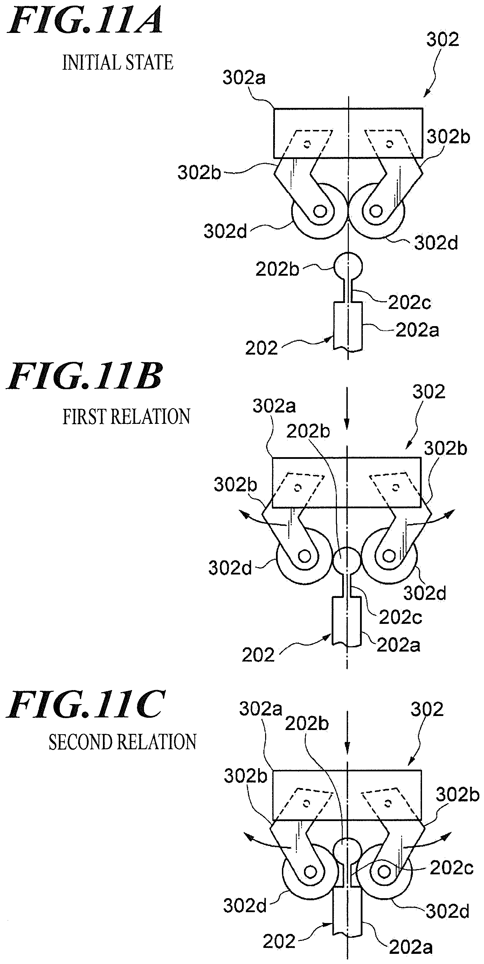

Next, the surface processing method of the combiner 200 which is the predetermined process is described with reference to the drawings. FIG. 8 is a diagram showing the combiner 200 held by the jig 300 being dipped. The combiner 200 before being processed is stored in a state standing in a storage not shown (see FIG. 4). For example, using the stage (not shown) which moves according to a three-dimensional coordinate input in advance, the frame 301 and the holders 302 are positioned above the combiner 200 before processing as shown in FIG. 4, and is set to be the initial state shown in FIG. 11A. Then, this is lowered.

Before coming into contact with the member engaging unit 202, the rollers 302d, 302d are in contact with each other as shown in FIG. 11A. After coming into contact with the cylinder 202b of the member engaging unit 202, when the holder 302 is further lowered, force is applied in the direction separating from the cylinder 202b. With this, as shown in FIG. 11B, the lower edge of the arm members 302b, 302b are spread out against the urging force of the spring 302e, and the rollers 302d, 302d are separated along the outer circumferential surface of the cylinder 202b (become a first relation). Here, a width (size) of the cylinder 202b in the position where the rollers 302d, 302d come into contact become gradually larger from the upper edge from the direction that the rollers 302d, 302d come closer. Therefore, the rollers 302d, 302d can be easily engaged to the cylinder 202b. Moreover, the rollers 302d, 302d are rotated along the outer circumferential surface of the cylinder 202b. Therefore, the holder 302 can be lowered easily.

When the holder 302 is further lowered, the rollers 302d, 302d exceed the maximum diameter of the cylinder 202b, and the arm members 302b, 302b are gradually closed. When the rollers 302d, 302d reach the linking unit 202c, the state is shown in FIG. 11C, and the lowering of the holder 302 stops here (see FIG. 5). Here, due to the urging force of the spring 302e, the rollers 302d, 302d are urged in the direction to come closer through the arm members 302b, 302b, and the outer circumferential surfaces come into linear contact with the cylinder 202b or the linking unit 202c (becomes a second relation closer than the first relation).

When the frame 301 is raised in this state, the rollers 302d, 302d come into linear contact with the cylinder 202b. Here, in order to roll over the cylinder 202b, the arm members 302b, 302b need to be spread out against the urging force of the spring 302e, and the rollers 302d, 302d need to separate along the outer circumferential surface of the cylinder 202b so as to be in the first state. However, the weight of the combiner 200 is relatively small and cannot be forced against the urging force of the spring 302e. Therefore, the lower edge of the arm members 302b, 302b remain closed. Therefore, when the frame 301 is raised, the combiner 200 is also raised in a state with the member engaging units 202 held by the rollers 302d, 302d.

Then, as shown in FIG. 8, after the holders 302 and the frame are moved above the liquid tank VL in which hard coat processing liquid HPL is accumulated, the above is lowered until the hard coat processing liquid surface comes to a defined position with relation to the projecting surface (one optical surface) 201a and the rear surface (other optical surface) 201c of the projector 201. After the projector 201 is dipped in the hard coat processing liquid HPL, the holder 302 is raised, the combiner 200 is raised from the liquid tank VL, and the holders are conveyed holding the combiner 200 to perform the following processes such as drying.

In the next process, the holder 302 is lowered with the frame, and the combiner 200 is placed in a concave CV shown with a long and short dash line in FIG. 6 and fixed. From this state, the position of the holder 302 is changed to a longitudinal direction of the cylinder 202b. Here, the outer circumferential surface of the rollers 302d, 302d come into linear contact with the cylinder 202b or the linking unit 202c and frictional force in the displacement direction becomes drastically lower compared to coming into contact by the surface. Therefore, the holder 302 can be easily separated from the member engaging unit 202. According to the result of consideration by the inventors, the maximum strength from when the frame 301 is brought close to the combiner 200 in the vertical direction until the holder 302 is engaged to the member engaging unit 202 is 17N, and the maximum strength from when the frame 301 is separated from the combiner 200 in the horizontal direction until the holder 302 is engaged to the member engaging unit 202 is 1.6 N.

According to the above-described embodiment, the outer circumferential surface of the rollers 302d, 302d is in linear contact with the cylinder 202b or the linking unit 202c and the combiner 200 can be securely held by the jig 300 without damaging the optical surfaces 201a, 201c. Therefore, it is possible to prevent problems such as the combiner 200 shaking or falling during movement or processing. Moreover, the outer circumferential surface of the rollers 302d, 302d come into linear contact with the cylinder 202b or the linking unit 202c, and the combiner 200 can be held accurately by the jig 300. Therefore, the combiner 200 can be dipped to a suitable position with relation to the liquid surface of the hard coat processing liquid HPL in the liquid tank VL, and the merchandise quality is enhanced. Further, the holding position of the jig 300 with relation to the combiner 200 is kept at a certain position. Therefore, the jig 300 is not dipped in the hard coat processing liquid when the combiner 200 is dipped in the hard coat processing liquid. Consequently, it is possible to prevent the hard coat processing liquid HPL from being contaminated. According to the above-described embodiments, two sets of the arm member 302b and the roller 302d are provided, but alternatively, the same effect can be achieved when one set of the arm member 302b and the roller 302d are included in the first engaging unit, and a plane extending opposed to the roller 302d is the second engaging unit.

### (Modification)

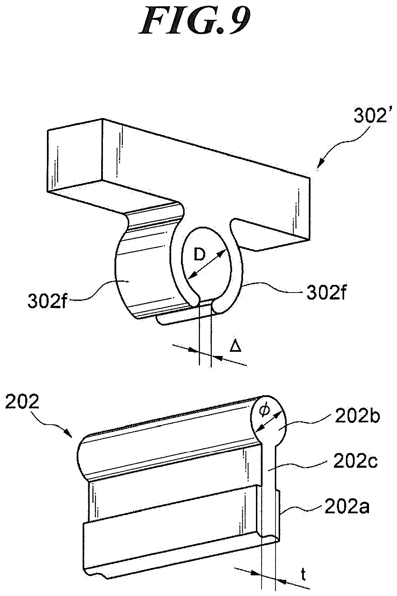

FIG. 9 is a diagram showing a relation between a holder 302' which is a modification of the present embodiment and a member engaging unit 202. According to the example shown in FIG. 9, the holder 302' fixed to the frame (not shown) is formed as one from material including flexibility such as resin, and the holder 302'includes a pair of hook members 302f, 302f which are a curved plate. The tips of the hook members 302f, 302f (each included in the first engaging member and the second engaging member) are edges parallel to the axis of the cylinder 202b. Preferably, the diameter D of the inscribed circle of the hook members 302f, 302f in the free state is the same as the diameter φ of the cylinder 202b or smaller. Here, a tip interval Δ when the hook members 302f, 302f are in the free state is larger than the width of the linking unit 202c.

When the frame (not shown) is lowered from the state shown in FIG. 9, after the tips of the hook members 302f, 302f come into contact with the cylinder 202b, the force is applied in the direction separating from the cylinder 202b. With this, the tip of the hook members 302f, 302f is spread out against the flexibility of the hook members 302f, 302f, and the hook members 302f, 302f are separated along the outer circumferential surface of the cylinder 202b (first relation).

When the holder 302' is further lowered, the tip of the hook members 302f, 302f pass the maximum diameter of the cylinder 202b, and gradually start to close. When the hook members 302f, 302f move to the linking unit 202c side, the holder 302' is not lowered further. Here, due to the flexible force of the hook members 302f, 302f, the inner circumferential surface comes into close contact with the outer circumferential surface of the cylinder 202b and comes into surface contact (second relation closer than first relation).

In such state, a holding force is generated between the outer circumferential surface of the cylinder 202b and the inner circumferential surface of the hook members 302f, 302f, and the separation of the above is suppressed. With this, the combiner 200 can be raised when the frame 301 is raised. When the holder 302' is separated from the member engaging unit 202, the combiner 200 may be fixed to a separate holding tool (not shown) and the frame 301 may be raised or the holder 302' may be separated in the horizontal direction.

According to another modification, the tip interval Δ of the hook members 302f, 302f in the free state can be made smaller than the thickness t of the linking unit 202c.

According to this example, when the holder 302' is lowered, similar to the above, the tips of the hook members 302f, 302f pass the maximum diameter of the cylinder 202b and then come into linear contact with the linking unit 202c.

In such state, when the frame 301 is raised, the tips of the hook members 302f, 302f are hooked to the cylinder 202b and the combiner 200 can be raised. In order to separate the holder 302' from the member engaging unit 202, similar to the above-described embodiment, the combiner 200 is placed in the concave CV as shown in FIG. 6, and when the position of the frame 301 is changed in the longitudinal direction of the cylinder 202b, the tips of the hook members 302f, 302f slides in the direction of linear contact with the linking unit 202c, and the holder 302 can be easily separated from the member engaging unit 202. According to the above modification, a pair of hook members 302f are provided, but alternatively, the same effect can be obtained when one hook member 302f is the first engaging unit and the planar surface extending facing the hook member 302f is the second engaging unit.

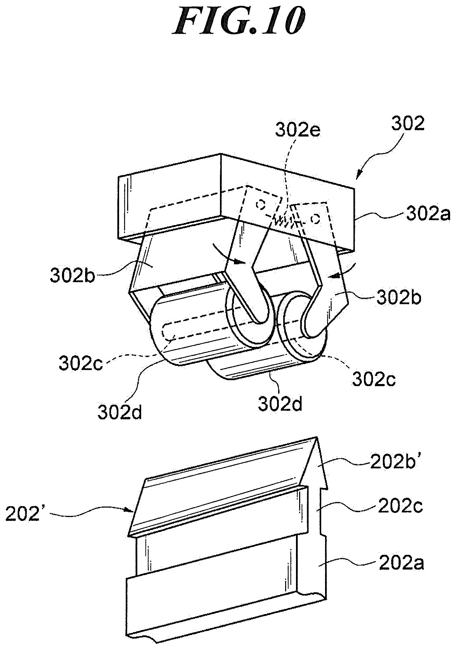

According to another modification, as shown in FIG. 10, the tip linked to the plate shaped linking unit 202c extending along the base 202a of the member engaging unit 202 may be a thick tip unit 202b' formed with a cross section in a wedge shape or a droplet shape instead of the cylinder.

Since the thick tip unit 202b' is formed in a wedge shape or a droplet shape, the rollers 302d, 302d of the holder 302 run a gentle slope when engaged. Therefore, the member engaging unit 202 can be easily introduced. Further, when the holder 302 is lowered, the rollers 302d, 302d pass the maximum width of the thick tip unit 202b'in the wedge shape or the droplet shape and can be hooked to a steep slope or a corner on the linking unit 202c side of the thick tip unit 202b'. With this, the arms 302b, 302b are closed.

In the next process after the hard coat processing, when the combiner 200 is placed in the concave CV as shown in FIG. 6, and the position of the frame 301 is changed in the longitudinal direction of the thick tip unit 202b' in the wedge shape or droplet shape, the outer circumferential surface of the rollers 302d, 302d are in linear contact with the thick tip unit 202b' in the wedge shape or droplet shape and the linking unit 202c. Therefore, the holder 302 can be easily separated from the member engaging unit 202.

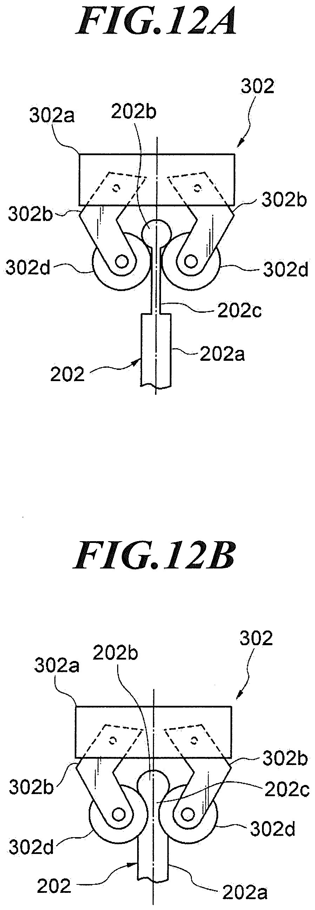

The linking unit 202c has a length so that when the holder 302 is further lowered from the state of the first relation shown in FIG. 7, 10, and 11, and the rollers 302d, 302d pass the maximum diameter of the cylinder 202b to be the state of the second relation, the rollers 302d, 302d come over the cylinder 202b and the base 202a. Alternatively, as shown in FIG. 12A, the length of the linking unit 202c can be made longer so that the rollers 302d, 302d come into linear contact with the linking unit 202c without coming into contact with the base 202a. Alternatively, as shown in FIG. 12B, the linking unit 202c can have a curve shape to fit with the outer circumference of the rollers 302d, 302d.

The present invention is not limited to the embodiments described in this description. It is clear to those skilled in the art from the embodiments and ideas described in the description that other embodiments and modifications are included in the present invention. For example, the display member and the head-up display device according to the present invention are not limited to use in automobiles and can also be used in airplanes and heavy machinery. The processing liquid is not limited to hard coat processing liquid and includes processing liquid to form various layers such as antifouling coat, antireflective coat, and the like.

### Industrial Applicability

The present invention can be used in a display member, a head-up display device and a jig.

### Description of Reference Numerals

100 drawing unit
110 drawing device
111 liquid crystal display panel
120 concave mirror
130 housing
200 combiner
201 projector
201a, 201c projecting surface
201 b upper edge surface
201e side edge surface
202, 202' member engaging unit
202a base
202b cylinder
202b' wedge shaped or droplet shaped tip thick unit
202c linking unit
300 jig
301 frame
302, 302' holder
302a case
302b arm member
302c axis
302d roller
302e spring
302f hook member
DB dashboard
DR driver
HPL hard coat processing liquid
L display light
VH vehicle
VL liquid tank
WS windshield

## Claims

1. A display member comprising:
an optical surface on which a predetermined process is performed; and
a member engaging unit which is linked to the optical surface and which is held by a first engaging member and a second engaging member of a jig,
wherein,
the member engaging unit includes a thick potion and a thin portion which is a size smaller than the thick portion and which is linked to the thick portion, and when the jig comes close and passes the thick portion, the first engaging member and the second engaging member are in a first relation separated from each other, then, when the jig reaches the thin portion, the first engaging member and the second engaging member are in a second relation closer than the first relation, and at least in the second relation, both the first engaging member and the second engaging member are in a linear contact or a surface contact with the member engaging unit, and
the member engaging unit is held between the first engaging member and the second engaging member in the second relation and the member engaging unit is held through the jig during the predetermined process.

2. The display member according to claim 1, wherein the thick portion includes a cross section with a cylinder shape.

3. The display member according to claim 1 or 2, wherein the predetermined process is a process in which the optical surface of the display member held by the jig is dipped in a processing liquid.

4. The display member according to any one of claims 1 to 3, wherein a size of the thick portion becomes gradually larger from the tip in a direction that the first engaging member comes close to the second engaging member.

5. A head-up display device comprising:
a display member according to any one of claims 1 to 4, and
a drawing unit which emits a display light to the display member.

6. A jig which holds the display member according to any one of claims 1 to 4, the jig comprising:
a first engaging member and a second engaging member which hold both sides of the member engaging unit.

7. The jig according to claim 6, wherein at least one of the first engaging member and the second engaging member includes a roller in contact with the member engaging unit and an arm urged to a predetermined direction while maintaining the roller to be rotatable.

8. The jig according to claim 6, wherein at least one of the first engaging member and the second engaging member flexibly deforms when coming into contact with the thick portion of the member engaging unit.

9. The jig according to claims 6 to 8, wherein the predetermined process is a process in which the optical surface of the display member held by the jig is dipped in a processing liquid and the first engaging member and the second engaging member are not dipped in the processing liquid.
